# EUROPEAN PATENT SPECIFICATION

(11) **EP 1 647 239 B1**
(45) Date of publication and mention of the grant of the patent: **12.11.2008**
(21) Application number: 05022434.4
(22) Date of filing: 14.10.2005
(51) Int. Cl.: A61C 8/00

(54) **Dental implant with an internal and an external hexagonal seat and tool connection means that fit in said hexagonal internal seat.**
Zahnimplantat mit einer äusseren und einer inneren sechseckigen Aufnahme und Werkzeugverbindungsmitteln, welche an die innere sechseckige Aufnahme angepasst sind.
Implant dentaire avec logements hexagonaux interne et externe et éléments de connection à un outil qui s'emboitent dans ledit logement hexagonal interne.

(30) Priority: 15.10.2004 BR 8402444 U
(43) Date of publication of application: 19.04.2006
(73) Proprietor: Thomé, Geninho, 1008 Curitiba PR (BR)
(72) Inventor: Thomé, Geninho, 1008 Curitiba PR (BR)
(74) Representative: Carvajal y Urquijo, Isabel

(56) References cited:
- WO-A-00/27300
- WO-A-20/04019807
- US-A- 4 854 873
- US-A1- 2003 224 322

## Description

### 1. Utility Model Field

First of all, it fits to clarify that the improvements, contained and showed on this description are based in a MU8401655-8 patent, in which it brought some IMPROVEMENT, resulting in a better product, with more quality about the longed results, as it is observed allow.

The present utility model patent filling is mentioned to an innovative dental implant, always used in the exercises of "Implantodontia". Such implant with a internal torque, for possessing a hexagonal intern connection adapted, for possessing a counter angle connection to use, for possessing a torque meter ratchet wrench connection to use, and, for possessing other aspects causing the insertion assisted mounter system elimination, eliminating possible deformations to an hexagon internal implant and consequently undesirable adaptations of the prosthetic component, for these and other reasons the showed improvement provides to greater effectiveness and quality in a surgical process, in that it refers to dental implant, configuring in this way as a new product in a same type market, bringing a lot of benefits in your use.

### 2. Technical Statement

Generally they are defined as implant, flange and/or titan refinery pins commercially purity, with a cylindrical or conic format, with a different length and diameter and hexagonal fit to an appropriate surgical insertion moment and subsequent fixation of a prosthetic component. They can be made with a different kind of external thread and also different surface treatments.

These kinds of thread are surgically put up into the bone tissue, in an indent area, staying finally there as dental prosthesis anchor. In this way they have the capacity to fulfill the chew and works function like natural teeth.

Normally. the implant is installed in two steps: the first one, surgical, to put the implant and the second, prosthetic, to put the devices which will support the dental prosthesis over the implant already installed.

The main purpose is given back esthetic, functional and physiologic oral health to a patient.

Nowadays, as everybody knows, on a traditional implant it is indispensable mounting system use, that are implant fitted pieces whose help In the insertion moment. The settings are fixed to the implant through the mounting flange.

The mounting is fitted to an implant on an external region of the hexagon in it. To the implant installation with mounting it is necessary use the key that transport the whole to a surgery socket (where the implant will be set).
One of the bigger problems of the mounting system, in the installation moment, when the excessive torque is made, there is a possibility of occur a micro movement ot the mounting and it can be break in the implant causing a hard disruption to the surgeon.

Another Important aspect to be analyzed in the traditional implants is that its torque is at all applied over the implant external hexagon (where is setting the prosthetic component and so it may be well adjusted), causing often eventual deformatlons to an external hexagon, in this case it's necessary to readapt the prosthetic component undesirable.

Document WO 00/27300 describes a grooved implant The implant has a portion that projects upward from the top surface of the implant, the external surface of which has a polygon, hexagon configuration section, and the inside perimeter surface of which has been equipped with grooves that extent according to the longitudinal direction, in angularly spaced positions. The separating element has the inserting end with a final revolving portion, with a preset tapered angle, and perimeter recesses made according to the longitudinal direction, adapted to leave forms with wings that penetrate the mentioned grooves of the implant.

The technical statement recognize that it can be performed improvements on a dental implant, using the implant with internal torque, disposing of the internal hexagon to its fixation, protecting the external hexagon to receive after the prosthetic component, and eliminating the mounting system, this way it let begetting disruption in the surgical practices.

Allying to this new implant with internal torque, the technical statement recognize the possibility of generating two properly improved implant own connections to be used in the surgeon process, enabling the implant attachment inner the patient's osseous tissue.

### SUMARY OF THE INVENTION

The object of the present invention is disclosed in claim 1.

The internal torque implant was developed to eliminate the insertion system supported by the mounting, for possess an internal hexagon mortise, where all of the implant fixation process, and the torques to mortise, are made internally and axially located under the external hexagon region, protecting the implant external hexagon.

In this way, was developed an implant with internal torque. In your construction there is unnecessary to proceed with the fixations in you external hexagon, where all the process of surgical accommodation in the osseous tissue will be made proceeding with the torques on the internal hexagon and under axially of the external hexagon region, across the connection to counter-angle and after connection to a torquimeter ratchet wrench. So, was eliminated the mounting use necessity, deteriorative in such moments to surgeons and obtaining the protection of the external hexagon who will receive the prosthetic component.

The implant with internal torque shows your difference to another implants actually developed in your internal region. Yours geometry, to an installation, are projected to an implant insertion during the surgery with a connection that is adapted to an hexagon internally treating which eliminates the mounting that actually make the implant ensemble.

So, besides the eliminating the mounting system, the process made that the torque, who previously was applied over the implant external hexagon (adaptation that will receive the prosthetic component and must have an adjusted endurance), be now applied to itself internal hexagon and axially beneath the external hexagon region, eliminating possible deformations to external hexagon and consequently undesirable adaptations of the prosthetic component.

The connections are projected to two different kinds of applications. the first one, with the use of the counter-angle (automatic instrument from dentistry use) and another to use in a torquimeter ratchet wrench (manually instrument from dentistry use).

The connection to the counter-angle has, besides the hexagon that enable the implant torque application, a tweezers made by titanium coalition that is pressed on a connection body and fit in to implant external hexagon, once that your axial position allows the accommodation to implant external hexagon been the connection into the internal hexagon to fixation, that has the capture implant function at the transport moment to installation with a tenuous pressure in the external hexagon, without damage it.

The connection, beyond fix the implant by the external hexagon, has a hexagon which enables the Installation torque internally to the implant, and doesn't need the external hexagon as support point, eliminating the hexagon deformation cases by torque excess.

In the torquimeter ratchet wrench connection there is the same hexagon, also located axially under the implant external hexagon where the connection are introduced in an Internal hexagon to fixation. On this case isn't applied the tweezers system which capture the implant because the connection is used to controlled torque and depends the implant pre-installation.

This tweezers system is used only in counter-angle connection, because with the opposite-angle that's the implant is captured in the package and after it is made the insertion.

After the implant was introduced, the final torque is applied with the torquimeter ratchet key connection, which enables the torque application till 8ON/cm.

So, clearly, the present points which compose the utility model are: the internal torque implant (1), the counter-angle connection (2) and the torquimeter ratchet wrench connection (3).

### DRAWINGS BRIEF SCRIPTION

Aiming a better comprehension from the arrangement applled in the present invention , are presented drawings which will be made some references, connected to the detailed report allow, where:
The picture number 1 shows in the perspective view, the internal torque implant (1), where we see all your made form, notedly, the internal hexagon (1A), the external hexagon (1B) and external thread (1C);
The picture number 2 shows the frontal view, but shined, the internal torque implant (1), giving major significance to the internal aspects from the implant (1), showing, in this way, the internal hexagon (1A), the internal flange (1 D), the external flange (1 C) and the external hexagon (1 B);
The picture number 3 shows the frontal-superior view, the internal torque implant (1) and the opposite-angle connection (2), point how's going be the accommodation process between the instruments. In this picture is shown the external thread (1C) and the external hexagon (1B), both of the implant (1) and the tweezers (2A), the external hexagon (2B) and the fit connection (2C), all of the connections (2) to the counter-angle;
The picture 4 shows the implant with inner torque (1) and the connection (2) to the counter-angle, however in an evident way;
The picture 5 shows the implant with inner torque (1) and the connection (2) to the counter-angle, both fitted;
The picture 6 shows the implant with inner torque (1) and the connection (2) to the counter angle, properly fitted, sharpened and translucent, in order to show off to technician how the inner fitness process of respective instruments will be;
The picture 7 shows the frontal view the connection (3) to the torquimeter ratchet wrench, revealing the external hexagon (3A), the upper sample (3B) and the fit connection (3C);
The picture 8 shows the implant with the inner torque (1) and the connection (3) to the torquimeter ratchet wrench, revealing how the fit process will be;
The picture 9 shows the implant with the internal torque (1) and the connection (3) to the torquimeter ratchet wrench, in a translucent view, aiming to detail how the inner fitness instruments process will be;

This is a detailed presentation in a demonstrative and not restrictive way because the measures or materials can be changed so as the invention without departing from the scope of the claim..

### DETAILED DESCRIPTION OF THE FAVORITES GENRES

The internal torque implant (1), object of the present utility model, has pure titanium as a material, with cylindrical format, gifted with an internal flange (1D) and also an external flange (1C), with hexagonal accommodation internally (1A) and externally (1 B).

The implant (1) has an internal hexagon (1A), that allow the connection with the hexagon (2B and 3A), of the connections to an opposite-angle and torquimeter ratchet key, in this order.

In the implant interior (1), there is an internal flange (1 D) that will serve as spin fixation to receive the prosthetic component connection, together with the external hexagon (1 B).

The connection (2) to a counter-angle will rescue the implant (1) from the package, connecting the internal hexagon (1A) and the tweezer (2A) in the implant external hexagon (1B), transporting the implant (1) into the lodging local, and proceeding with keen torque to a total insertion.

When the implant (1) is already installed in the patient osseous tissue, the connection (3) to the torquimeter ratchet key will be connect to the implant (1) internal part, more specifically the internal hexagon (1A) with a guide on the internal flange diameter (1D), accommodating on the implant (1) area the external hexagon (3A) and the accommodation connection (3C), and proceeding the connection (3) with controlled torques while we got the perfect implant (1) accommodation and installation on the patient.

So, we can see with all showed above that in any moment there is any kind of proceed that attack the external hexagon (1B), eliminating troubles with the insertion of the prosthetic component. We also see that the mounting use is dismissed, avoid implant deformations.

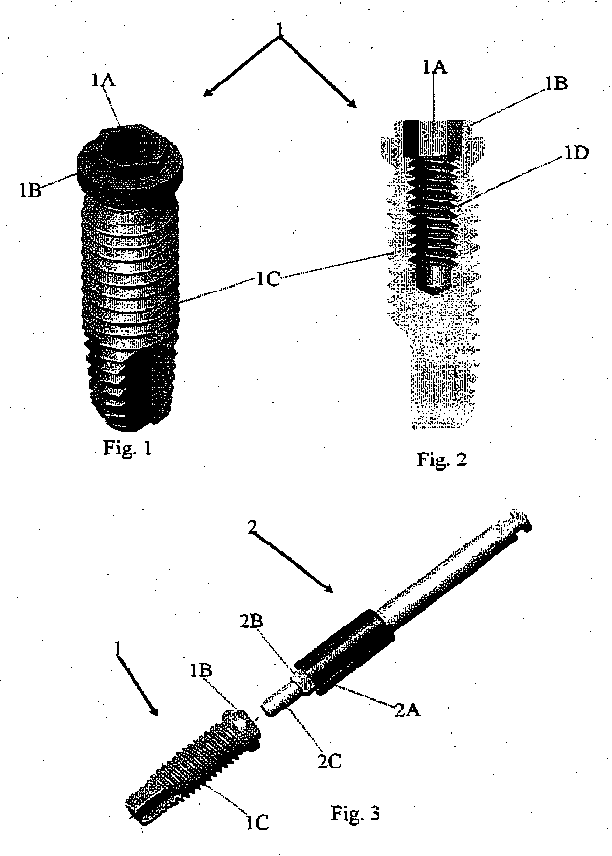

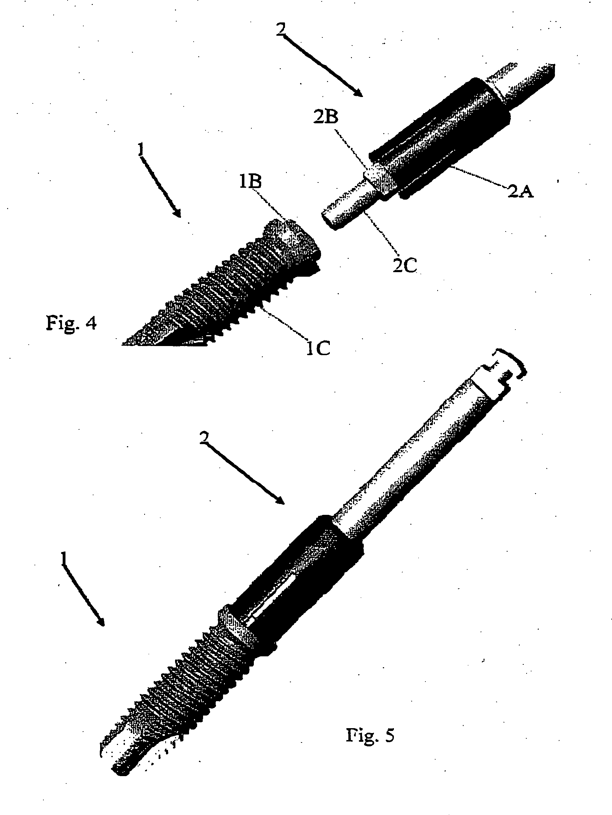

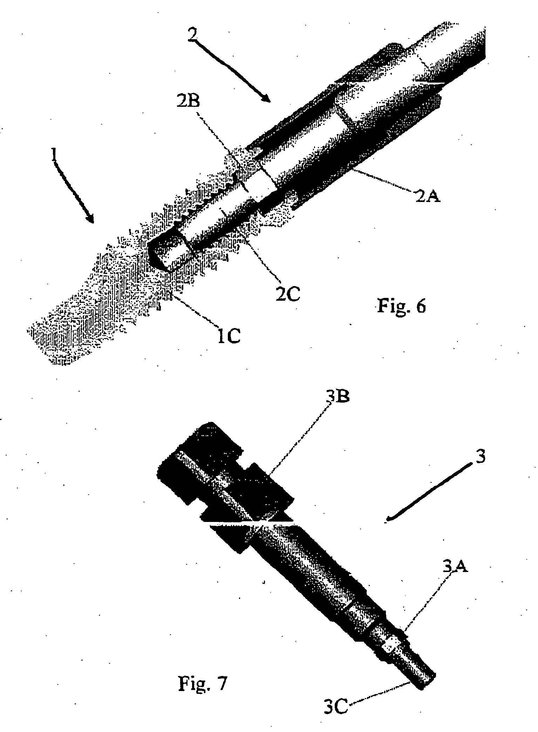

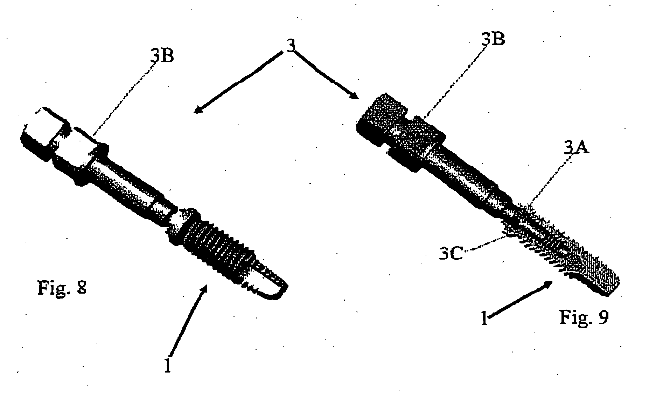

## Claims

1. A dental kit comprising :
- a dental implant with internal torque, said implant having a pure titanium material, a cylinder shape, an internal thread (1D), an external thread(1C), an external hexagon (1B) as means of receiving and connecting a component in combination with the mentioned inside thread (1D) and an internal hexagon socket (1A), over the mentioned inside thread (1D), designed to allow the efforts made during the operation of implant with a counter-angle connection instrument (2) or a torquemeter ratchet wrench connection instrument (3);
- a counter-angle connection instrument (2) that shows a hexagon shape (2B) made to be inserted in the mentioned internal hexagon socket (1A) of the implant, next to the insertion end of the instrument endowed with an outside tweezer (2A) to fit onto the implant external hexagon (1B) in order to hold the implant; and
- a torquemeter ratchet wrench connection instrument (3) including a hexagon shape (3A) sized to be inserted in the mentioned internal hexagon socket (1A) of the implant, near its insertion end;
wherein the counter-angle connection instrument (2) is the connection instrument for automatic use, and the torquemeter ratchet wrench connection instrument (3) is the connection instrument for manual use.

## Patentansprüche

1. Zahnbehandlungsset, welches umfasst:
- ein Zahnimplantat mit innerem Drehmoment, wobei das genannte Implantat ein reines Titaniummaterial hat, sowie eine Zylinderform, ein inneres Gewinde (1D), ein äußeres Gewinde (1C), ein äußeres Sechseck (1B) als Mittel zum Aufnehmen und Verbinden eines Elements in Verbindung mit dem erwähnten Innengewinde (1 D) und einem inneren sechseckigen Sockel (1A) über das erwähnte Innengewinde (1D), wobei es ausgelegt ist, um den während der Implantatoperation realisierten Kraftaufwand mit einem Gegenwinkel-Verbindungsinstrument (2) oder einem Drehmomentmessgerät-Ratschenschlüssel-Verbindungsinstrument (3) zuzulassen;
- ein Gegenwinkel-Verbindungsinstrument (2), das eine sechseckige Form (2B) zeigt, die zum Einführen in dem erwähnten inneren sechseckigen Sockel (1A) des Implantats gemacht wurde, neben dem Einführungsende des Instruments, das mit einer äußeren Pinzette (2A) zum Anbringen auf dem äußeren Sechseck (1B) des Implantats zur Halterung des Implantats ausgestattet ist; und
- ein Drehmomentmessgerät-Ratschenschlüssel-Verbindungsinstrument (3), das eine sechseckige Form (3A) beinhaltet, deren Größe so bemessen ist, dass sie in den erwähnten inneren sechseckigen Sockel (1A) des Implantats eingeführt wird, in der Nähe seines Einführungsendes;
wobei das Gegenwinkel-Verbindungsinstrument (2) das Verbindungsinstrument für den automatischen Gebrauch ist, und das Drehmomentmessgerät-Ratschenschlüssel-Verbindungsinstrument (3) das Verbindungsinstrument für den manuellen Gebrauch ist.

## Revendications

1. Kit dentaire comprenant :
- un implant dentaire avec un couple interne, ledit implant ayant une matière de titane pure, une forme de cylindre, un filet interne (1D), un filet externe (1 C), un hexagone externe (1B) comme moyen pour recevoir et connecter un composant en combinaison avec ledit filet intérieur (1D) et un socle d'hexagone interne (1A), au-dessus dudit filet interne (1D), conçu pour permettre les efforts réalisés pendant l'opération d'implant avec un instrument de connexion de contre-angle (2) ou un instrument de connexion de clé à cliquet de couplemètre (3) ;
- un instrument de connexion de contre-angle (2) qui montre une forme d'hexagone (2B) réalisé pour être inséré dans ledit socle d'hexagone interne (1A) de l'implant, près de l'extrémité d'insertion de l'instrument pourvu de brucelles extérieures (2A) pour s'ajuster sur l'hexagone externe de l'implant (1B) afin de retenir l'implant ; et
- un instrument de connexion de clé à cliquet de couplemètre (3) incluant une forme d'hexagone (3A) dimensionné pour s'insérer dans ledit socle d'hexagone interne (1A) de l'implant, près de son extrémité d'insertion ;
dans lequel l'instrument de connexion de contre-angle (2) est l'instrument de connexion à utilisation automatique, et l'instrument de connexion de clé à cliquet de couplemètre (3) est l'instrument de connexion à utilisation manuelle.
